# EUROPEAN PATENT APPLICATION

(11) **EP 1 732 232 A1**
(43) Date of publication of application: **13.12.2006**
(21) Application number: 05720924.9
(22) Date of filing: 16.03.2005
(51) Int. Cl.: H04B 1/08, H04B 1/38, H01Q 1/24, H04M 1/02, H04M 1/21, H04N 5/44, H04N 5/64

(54) **PORTABLE TELEPHONE WITH BROADCAST RECEIVER**

(30) Priority: 30.04.2004 JP 2004135991
(71) Applicant: MATSUSHITA ELECTRIC INDUSTRIAL CO., LTD., Osaka 571-8501 (JP)
(72) Inventor: YAMAZAKI, Yukari Matsushita Electric Ind.Co,Ltd., 1-3-7 Shiromi, Chuo-ku Osaka 540-6319 (JP); SAITO, Yutaka Matsushita Electric Ind.Co,Ltd., 1-3-7 Shiromi, Chuo-ku Osaka 540-6319 (JP); KOYANAGI, Yoshio Matsushita Electric Ind.Co,Ltd., 1-3-7 Shiromi, Chuo-ku Osaka 540-6319 (JP); EGAWA, Kiyoshi Matsushita Electric Ind.Co,Ltd., 1-3-7 Shiromi, Chuo-ku Osaka 540-6319 (JP); SASAKI, Hiroyuki Matsushita Electric Ind.Co,Ltd., 1-3-7 Shiromi, Chuo-ku Osaka 540-6319 (JP)
(74) Representative: Grünecker, Kinkeldey, Stockmair & Schwanhäusser Anwaltssozietät
(86) International application number: PCT/JP2005/004673
(87) International publication number: WO 2005/107082

(57) **Abstract**

A portable telephone with broadcast receiver realizing high sensitivity performance by interlocking with the screen display state both at the time of broadcast receiving and portable telephone communication, thereby attaining suitable antenna polarization characteristics. An antenna element (1) is mounted on a display section case (3) in such a manner that its helical axis direction is aligned with the longitudinal direction of a liquid crystal display section (2). The display section case (3) is connected to an upper case (5) rotatably through a rotary shaft (4). The upper case (5) is coupled to a lower case (7) to be opened/closed freely through a hinge part (6). Main polarization direction of the antenna element (1) is varied depending on the rotational state of the liquid crystal display section (2) where its screen becomes long laterally or longitudinally, thus ensuring antenna polarization characteristics suitable for both at the time of broadcast reception and portable telephone communication.

## Description

### Technical Field

The present invention relates to a display section and an antenna of a mobile telephone having a broadcast receiving function.

### Background Art

Conventionally, portable television receivers have been used widely including a relatively large size and a small pocketable type. If this television receiving function is mounted in mobile telephones carried by many users daily, it is not necessary to carry both the mobile telephones and portable television receivers so that it is very convenient.

As one of the problems when the television receiving function is mounted in the mobile telephone, there is a configuration method of an UHF band reception antenna for a long wavelength of approximately 64 cm to 44 cm. In mobile telephone communication, a frequency for 800 MHz band or more with a wavelength of approximately 37 cm or less is used. While a vertically polarized wave is a main polarized wave of electric wave for mobile telephone communication, a horizontally polarized wave is the main polarized wave of electric wave for television broadcast. Therefore, an UHF band reception antenna having different specification from a mobile telephone antenna is required.

As an antenna of the conventional portable television receiver, a configuration is well-known where a dipole antenna is constituted by a monopole antenna and a battery, and arranged vertical with respect to the receiver, for example, as disclosed in Patent Document 1.

Further, a configuration is well known where two loop antennas are arranged perpendicular to one another, and the polarized waves are switched according to the state of use when the receiver is put on a human body, as disclosed in Patent Document 2.
Patent Document 1: Japanese Patent Application Laid-Open No.2001-251131
Patent Document 2: Japanese Patent Application Laid-Open No.HEI10-84209

### Disclosure of Invention

### Problems to be Solved by the Invention

However, with the above-described conventional antenna disclosed in Patent Document 1, there is a problem that the main polarized wave is a vertically polarized wave, and as a result, it is not possible to increase sensitivity with respect to the electric wave of a horizontally polarized wave.

Further, the conventional antenna disclosed in Patent Document 2 has a function for switching the main polarized wave, but there is a problem that sharing the antenna between a mobile telephone antenna and a television broadcast reception antenna is not considered.

It is therefore an object of the present invention to provide a mobile telephone with a broadcast receiver for sharing one antenna between a mobile telephone antenna and a television broadcast reception antenna, and having high sensitivity in both operation modes.

### Means for Solving the Problem

A mobile telephone with broadcast receiver according to the present invention adopts a configuration where the mobile telephone with broadcast receiver comprises a display section, a display section case where the display section is mounted, a rotation supporting section that rotatably supports the display section case attached to a mobile telephone body, and an antenna element mounted in the display section case, wherein a direction of a main polarized wave of the antenna element changes according to one of rotation states where a screen of the display section is horizontally long or vertically long.

According to this configuration, it is possible to change the direction of the polarized wave of the antenna according to the rotation of the display section so that high reception performance is obtained.

### Advantageous Effect of the Invention

According to the present invention, at the time of television broadcast reception, it is possible to rotate the display section in a horizontal direction and set the horizontally long screen which is appropriate for television broadcast reception, and according to that, set the polarized wave of the television reception antenna to the horizontally polarized wave so that high reception performance is obtained.

Further, by rotating the display section to be horizontally long, the display state which is appropriate for electronic mail transmission and reception and internet operation using mobile telephone communication, and also high communication sensitivity are obtained.

Further, it is possible to share one antenna element between both mobile telephone communication and television reception.

Furthermore, it is possible to set a high electromagnetic isolation between a radio circuit and a television receiving section of a mobile telephone and secure screening effect, so that it is possible to improve reception performance.

### Brief Description of Drawings

FIG.1 is a configuration diagram of a mobile telephone with a broadcast receiver according to an embodiment (television reception state);
FIG.2 is a configuration diagram of a mobile telephone with a broadcast receiver according to an embodiment (mobile telephone communication state);
FIG.3 is a diagram illustrating the operation of a mobile telephone with a broadcast receiver according to an embodiment (television reception state);
FIG.4 shows a radiation pattern (television reception state);
FIG.5 is a diagram illustrating the operation of a mobile telephone with a broadcast receiver according to an embodiment (mobile telephone communication state); and
FIG.6 shows a radiation pattern (mobile telephone communication state).

### Best Mode for Carrying Out the Invention

Now, embodiments of a mobile telephone with a broadcast receiver according to the present invention will be described in detail with reference to the accompanying drawings.

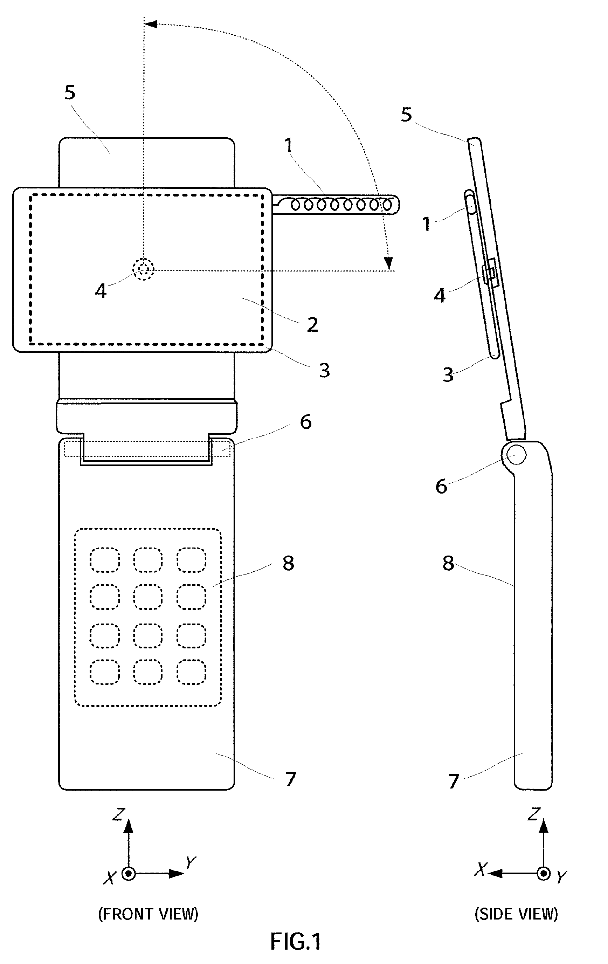

FIG.1 is a configuration diagram of a mobile telephone with a broadcast receiver according to an embodiment of the present invention. As shown in FIG.1, a mobile telephone with a broadcast receiver of this embodiment shows a configuration where display section case 3 with antenna element 1 and liquid crystal display section 2 mounted is connected to upper case 5 by rotation axis 4. Upper case 5 is linked to lower case 7 by hinge section 6 and can be opened and closed.

In FIG.1, liquid crystal display section 2 is, for example, a rectangular, liquid crystal display element of approximately 30 mm x 40 mm. Antenna element 1 is, for example, a helical antenna with a length of approximately 50 mm, and composed of a conductor with a wire diameter of approximately 1 mm; its electrical length is set at a wavelength of approximately 1/4 in the frequency band of television broadcast. Here, antenna element 1 is arranged in such a manner that the helical axis direction matches with a longitudinal direction of liquid crystal display section 2 (in a direction of the side of length 40 mm).

FIG.1 shows a case where the user rotates display section case 3 in an arrow direction and set liquid crystal display section 2 horizontally long. This state allows the user to view liquid crystal display section 2 set horizontally long while holding lower case 7 and operating key operation section 8 which is appropriate for television reception.

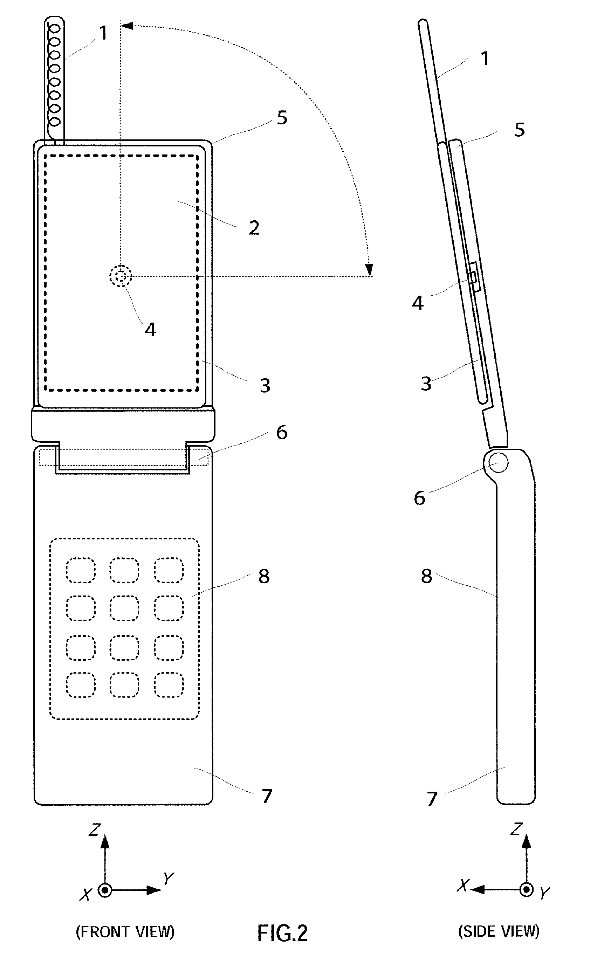

Next, FIG.2 shows a case where display section case 3 of the mobile telephone with a broadcast receiver shown in FIG.1 is rotated in an arrow direction to set liquid crystal display section 2 vertically long. This state allows the user to view liquid crystal display section 2 set vertically long while holding lower case 7 and operating key operation section 8 which is appropriate for electronic mail transmission and reception and internet operation using mobile telephone communication.

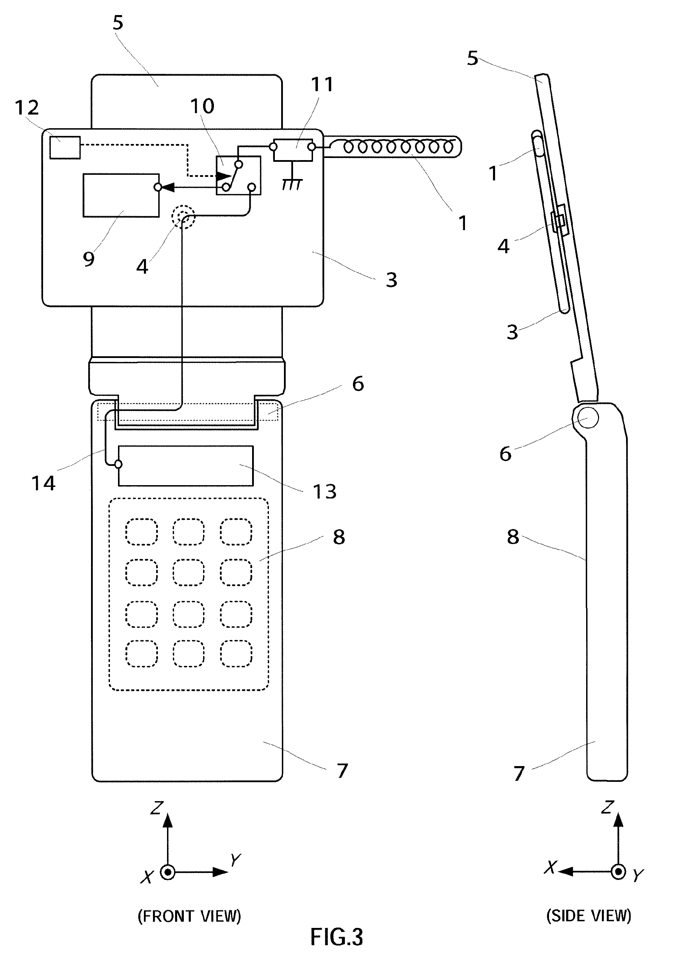

Next, FIG.3 shows the connection between the antenna and circuit of the mobile telephone with a broadcast receiver shown in FIG.1 in detail. Components in FIG.3 identical to those in FIG.1 are assigned the same numerals and show the same components, so that a detailed description thereof will be omitted.

In FIG.3, television receiving section 9, high frequency switch 10, matching circuit 11 and control section 12 are arranged inside display section case 3. Further, radio section 13 arranged inside lower case 7 and high frequency switch 10 are connected by coaxial cable 14.

In FIG.3, television receiving section 9 is a circuit for receiving and demodulating signals of television broadcast frequency. High frequency switch 10 is a low-loss high frequency switching circuit composed of, for example, GaAs-FET. Matching circuit 11 performs operation to make the impedance of antenna element 1 to match with the circuit impedance (generally, 50 to 75 ohms) in both television broadcast frequency and mobile telephone frequency. Radio section 13 is provided with a transmission circuit and a reception circuit for performing mobile telephone communication.

Control section 12 performs operations for switching high frequency switch 10 to the side of television receiving section 9 when the current operation state is a television reception mode and switching high frequency switch 10 to the side of radio section 13 when the current operation state is a telephone communication mode.

Here, in FIG.3, the television reception mode is selected, and antenna element 1 and matching circuit 11 are connected to television receiving section 9. Therefore, antenna element 1 operates as a television reception antenna.

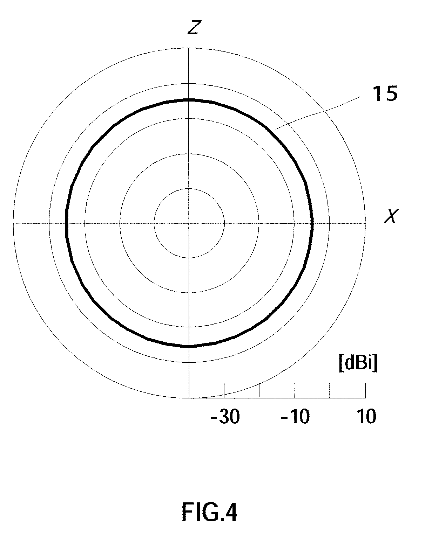

The radiation pattern of antenna element 1 of the moment is shown in FIG.4. FIG.4 shows radiation pattern 15 for a horizontally polarized wave component on the XZ plane, where the frequency is set at 500 MHz. With this drawing, a radiation characteristic of a horizontally polarized wave and vertical plane non-directivity is obtained, where the gain of the horizontally polarized wave is approximately -5 dBi. On the other hand, the gain of a vertically polarized wave component is several dBs or more lower than the gain of the horizontally polarized wave component so that the horizontally polarized wave becomes the main polarized wave. The reason for the above is that an axis direction of the helical antenna of antenna element 1 is directed in the Y axis direction in FIG.3, that is, in a horizontal direction. As a result, high sensitivity is obtained in television broadcast reception where the horizontally polarized wave is the mainstream.

In this way, by rotating display section case 3 to make liquid crystal display section 2 horizontally long, display state which is appropriate for television reception and also high reception sensitivity are obtained.

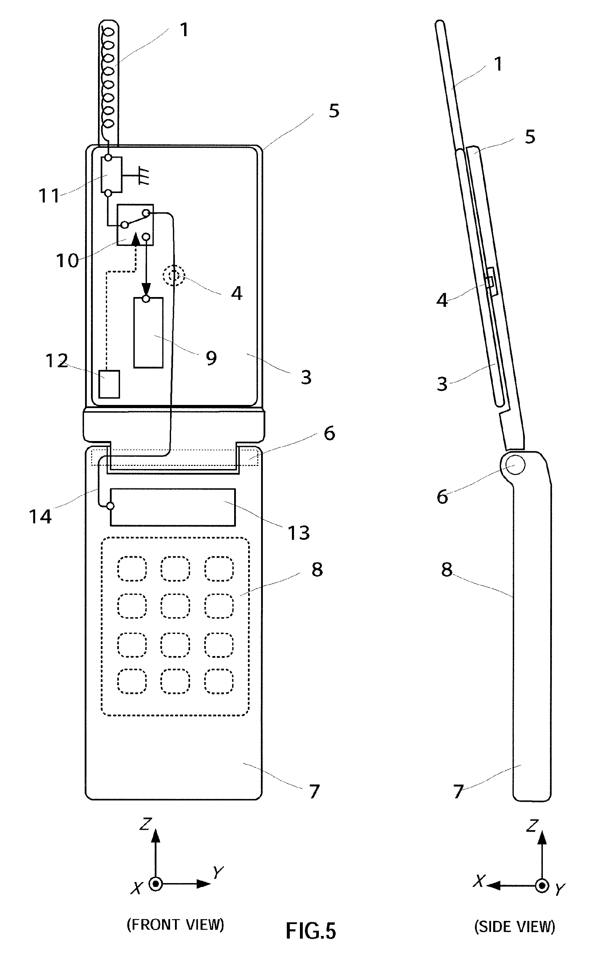

On the other hand, FIG.5 shows the connection between the antenna and circuit of the mobile telephone with a broadcast receiver shown in FIG.2 in detail. Components in FIG.5 identical to those in FIG.2 and FIG.3 are assigned the same numerals and show the same components, so that a detailed description thereof will be omitted.

Here, in FIG.5, the mobile telephone communication mode is selected, and antenna element 1 and matching circuit 11 are connected to radio section 13. Therefore, antenna element 1 operates as a mobile telephone antenna.

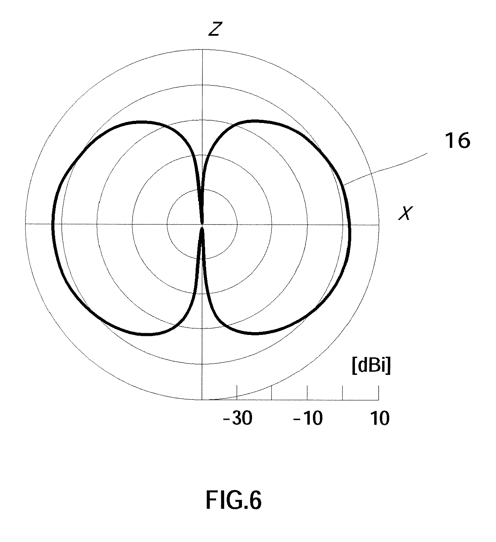

The radiation pattern of antenna element 1 of the moment is shown in FIG. 6. FIG. 6 shows radiation pattern 16 for a vertically polarized wave component on the XZ plane. With this drawing, a radiation characteristic of a vertically polarized wave and vertical plane 8 directivity is obtained, where the maximum gain of the vertically polarized wave is approximately 2 dBi. On the other hand, the gain of the horizontally polarized wave component is 10 dB or more lower than the gain of the vertically polarized wave component so that the vertically polarized wave becomes the main polarized wave. The reason for the above is that the axis direction of the helical antenna of antenna element 1 is directed in the Z axis direction in FIG.3, that is, in a vertical direction. As a result, high sensitivity is obtained in mobile telephone communication where the vertically polarized wave is used.

In this way, by rotating display section case 3 to make liquid crystal display section 2 vertically long, display state which is appropriate for electronic mail transmission and reception and internet operation using mobile telephone communication, and also high communication sensitivity are obtained.

With the above-described configuration, an effect is obtained where liquid crystal display states which are appropriate for both television reception and mobile telephone communication is selected, and at the same time, antenna radiation characteristics which are appropriate for each state are also obtained so that high sensitivity is obtained.

Further, television receiving section 9 is built in display section case 3, and radio section 13 is built in lower case 7, and certain intervals are maintained so that it is possible to set high electromagnetic isolation, and secure screening effect. This configuration provides an advantage of preventing an influence of, for example, a mobile telephone transmission signal of radio section 13 and a local oscillation signal from leaking into television receiving section 9, and improving reception performance.

In addition, in this embodiment, antenna element 1 is a 1/4 wavelength helical antenna, but the same effect is obtained, for example, if a conductor has an electrical length of 1/4 to 1/2 wavelength.

Further, antenna element 1 may be a shortened structure such as a meander line structure.

Further, antenna element 1 is not limited to the structure projecting outside, and a configuration may be possible where the polarized wave changes with the rotation of the display section even an opposite F antenna, loop antenna or slot antenna built into the case.

Further, to rotate liquid crystal display section 2, the user may rotate the display section manually, or a configuration may be rotated automatically at television broadcast reception by a operation button.

Further, high frequency switch may be switched according to the rotation of the display section using a means for detecting the rotation of liquid crystal display section 2 -- for example, a hall element and a magnet, or a mechanical detection sensor.

Further, an antenna element may be shared between a television receiving section and a mobile telephone radio circuit using an antenna duplexer with a combination of a low-pass filter and a high-pass filter instead of using high frequency switch 10.

Further, in this embodiment, a broadcast reception system has been described in conjunction with television, but, the same advantage is provided with other broadcast systems such as textual information and FM band broadcast.

Further, with the present embodiment, the display section has been described in conjunction with an example of liquid crystal display section 2, but the present invention is by no means limited to this, and any display sections applicable to mobile telephone including an organic EL display using organics such as diamines and non-organic EL displays using non-organics may be possible.

Although the present embodiment has described in conjunction with an example of so-called "foldable" mobile telephone capable of folding upper case 5 and lower case 7 by hinge section 6, the present invention is by no means limited to this, and mobile telephone with straight body may be possible where upper case 5 and lower case 7 are integrated without hinge section 6 if display section case 3 having liquid crystal display section 2 via rotation axis 4 is rotatable.

Further, the mobile telephone with a broadcast receiver of the present invention may have data communication functions in addition to telephone (voice call) and broadcast receiver functions, and may furthermore, include data communication apparatus with a broadcast receiver having data communication functions without telephone (voice call) functions.

A first aspect of the present invention is a mobile telephone with a broadcast receiver comprising a display section, a display section case where the display section is mounted, a rotation supporting section that rotatably supports the display section case attached to a mobile telephone body, and an antenna element mounted in the display section case, wherein a direction of a main polarized wave of the antenna element changes according to one of the rotation states where a screen of the display section is horizontally long or vertically long.

According to this configuration, it is possible to change the direction of the polarizedwave of the antenna according to the rotation of the display section so that high reception performance is obtained.

A second aspect of the present invention is a mobile telephone with a broadcast receiver wherein, in the aforementioned configuration, the direction of the polarized wave of the antenna element is arranged to match with a longitudinal direction of the display section.

According to this configuration, at the time of television broadcast reception, it is possible to rotate the display section in a horizontal direction, and set the horizontally long screen which is appropriate for television broadcast reception, and also set the polarized wave of the television reception antenna to horizontally polarized wave according to the setting so that high reception performance is obtained.

A third aspect of the present invention is a mobile telephone with a broadcast receiver wherein, in the aforementioned configuration, the direction of the main polarized wave of the antenna element is horizontal if the screen of the display section is set horizontally long in broadcast reception while the direction of the main polarized wave of the antenna element is vertical if the screen of the display section is set vertically long in mobile telephone communication.

According to this configuration, the antenna polarized wave characteristics which are appropriate for the state of use of both mobile telephone communication and television reception are obtained so that high sensitivity is obtained.

A fourth aspect of the present invention is a mobile telephone with a broadcast receiver, in the aforementioned configuration, further comprising a broadcast receiving section provided in the display section case, a mobile telephone transmission and reception section provided in the mobile telephone body, and a switching section that connects the antenna element connected to one of the broadcast receiving section and the mobile telephone transmission and reception section.

According to this configuration, it is possible to share one antenna element between both mobile telephone communication and television reception, and also the polarized wave characteristics which are appropriate for the state of use of both mobile telephone communication and television reception are obtained.

A fifth aspect of the present invention is amobile telephone with a broadcast receiver, in the aforementioned configuration, further comprising a broadcast receiving section provided in the display section case, a mobile telephone transmission and reception section provided in the mobile telephone body, and an antenna sharing section that shares the antenna element between the broadcast receiving section and the mobile telephone transmission and reception section.

According to this configuration, one antenna element can be shared between both mobile telephone communication and television reception, and also the polarized wave characteristics which are appropriate for the state of use of both telephone communication and television receptions are obtained.

The present application is based on Japanese Patent Application No.2004-135991, filed on April 30, 2004, the entire content of which is expressly incorporated herein by reference.

### Industrial Applicability

As described above, a mobile telephone with broadcast receiver of the present invention is capable of obtaining high sensitivity performance by obtaining polarized wave characteristics of an antenna according to a screen display state which are appropriate for television broadcast, and electronic mail transmission and reception and internet operation using mobile telephone communication. Furthermore, it is possible to share one antenna between television broadcast, electronic mail transmission and reception, and internet operation using mobile telephone communication. Therefore, miniaturization and low-cost of the mobile telephone are possible, and it is suitable for improvement of reception and communication performance, miniaturization and low-cost of the mobile telephone with broadcast receiver.

## Claims

1. A mobile telephone with a broadcast receiver, comprising:
a display section;
a display section case where the display section is mounted;
a rotation supporting section that rotatably supports the display section case attached to a mobile telephone body; and
an antenna element mounted in the display section case,
wherein a direction of a main polarized wave of the antenna element changes according to one of rotation states where a screen of the display section is horizontally long or vertically long.

2. The mobile telephone with a broadcast receiver according to claim 1, wherein the direction of the polarized wave of the antenna element is arranged to match with a longitudinal direction of the display section.

3. The mobile telephone with a broadcast receiver according to claim 2, wherein the direction of the main polarized wave of the antenna element is horizontal if the screen of the display section is set horizontally long in broadcast reception while the direction of the main polarized wave of the antenna element is vertical if the screen of the display section is set vertically long in mobile telephone communication.

4. The mobile telephone with a broadcast receiver according to claim 1, further comprising:
a broadcast receiving section provided in the display section case;
a mobile telephone transmission and reception section provided in the mobile telephone body; and
a switching section that connects the antenna element to one of the broadcast receiving section and the mobile telephone transmission and reception section.

5. The mobile telephone with a broadcast receiver according to claim 1, further comprising:
a broadcast receiving section provided in the display section case;
a mobile telephone transmission and reception section provided in the mobile telephone body; and
an antenna sharing section that shares the antenna element between the broadcast receiving section and the mobile telephone transmission and reception section.
